# EUROPEAN PATENT APPLICATION

(11) **EP 4 832 179 A1**
(43) Date of publication of application: **28.10.2026**
(21) Application number: 24908340.3
(22) Date of filing: 17.12.2024
(51) Int. Cl.: H01M 50/131, H01M 50/133, H01M 50/105, H01M 50/121, H01M 50/183, H01M 50/126

(54) **POUCH EXTERIOR MATERIAL FOR SECONDARY BATTERY, AND SECONDARY BATTERY**

(30) Priority: 22.12.2023 KR 20230189928
(71) Applicant: Youlchon Chemical Co., Ltd., Seoul 07057 (KR)
(72) Inventor: JUNG, Jong Hyuk, Ansan-si, Gyeonggi-do 15430 (KR); SONG, Nok Jung, Seoul 07057 (KR); HAN, Hee Sik, Ansan-si, Gyeonggi-do 15430 (KR); KIM, Jin Ho, Ansan-si, Gyeonggi-do 15430 (KR); JANG, Jee Eun, Ansan-si, Gyeonggi-do 15430 (KR); PARK, Han Chul, Ansan-si, Gyeonggi-do 15430 (KR); SHIN, Sung Chul, Ansan-si, Gyeonggi-do 15430 (KR)
(74) Representative: Grünecker Patent- und Rechtsanwälte PartG mbB
(86) International application number: PCT/KR2024/097087
(87) International publication number: WO 2025/136036

(57) **Abstract**

The present invention relates to a pouch case, and more particularly, to a pouch case in which, when the pouch case and a lead tab film are sealed, a polymer material pushed out from a sealing portion at a tab portion is uniformly formed also in a non-sealed portion to prevent a thickness of a sealant layer from becoming thin, thereby preventing insulation failure and improving long-term reliability such as chemical resistance, and to a secondary battery comprising the same.

## Description

### [Technical Field]

### CROSS-REFERENCE TO RELATED APPLICATION

This application claims the benefit of priority based on Korean Patent Application No. 10-2023-0189928, filed on December 22, 2023, the entire disclosure of which is incorporated herein by reference as a part of the present specification.

### TECHNICAL FIELD

The present invention relates to a pouch case for a secondary battery and a secondary battery comprising the same.

### [Background Art]

Recently, as the field of application of secondary batteries has rapidly expanded not only to the supply of electric power for electronic devices such as electric, electronic, communication, and computer devices, but also to the storage and supply of electric power for large-area devices such as automobiles and power storage devices, the demand for lithium secondary batteries that have a high capacity and a high output while also having high stability has been increasing.

A lithium secondary battery is generally manufactured by coating a positive electrode current collector and a negative electrode current collector, respectively, with a material obtained by mixing a positive electrode active material capable of intercalation and deintercalation of lithium ions, or a negative electrode active material capable of absorbing and releasing lithium ions, with, optionally, a binder and a conductive material, to thereby manufacture a negative electrode and a positive electrode, stacking these on both sides of a separator to form an electrode assembly of a predetermined shape, and then inserting the electrode assembly and a non-aqueous electrolyte solution into a battery case.

Lithium secondary batteries may be classified, according to their structure, into cylindrical secondary batteries, prismatic secondary batteries, pouch-type secondary batteries, and the like. Among these, a pouch-type secondary battery is manufactured by accommodating the electrode assembly in a pouch-type sheet and then sealing the sheet, and, since it has a simpler structure and a larger capacity per unit volume than other types of secondary batteries, it is widely used in automobile batteries, energy storage devices, and the like.

The case of such a pouch-type secondary battery is a pouch-type sheet for protecting the electrodes and the electrolyte solution from the outside, and is composed of a metallic film and a polymer material for sealing. In this case, as the polymer material of the sealant layer for the sealing, a thermoplastic and heat-fusible material composed of an olefin-based material such as polypropylene or polyethylene is mainly used.

In using the case of the pouch-type secondary battery, in order to maintain an electrical connection from the electrode assembly accommodated inside the case to the outside of the case, a tab needs to be drawn out to the outside of the case. Accordingly, when the case of the pouch-type secondary battery is sealed, at the tab portion, a lead tab film and the pouch-type sheet are directly sealed to each other.

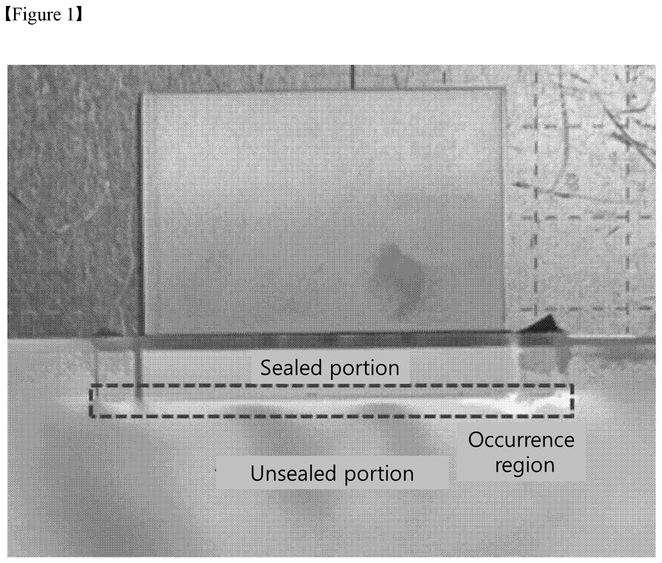

However, as shown in FIG. 1, unlike other sealing regions, in the region that is directly sealed to the lead tab film, there is a problem in that a phenomenon occurs in which the polymer material of the sealant layer is pushed out in a region (an occurrence region) between the sealing portion (the sealed portion) formed on the lead tab film after the sealing treatment and the non-sealed portion (the unsealed portion) located in the direction of the accommodation region of the electrode assembly of the case of the pouch-type secondary battery.

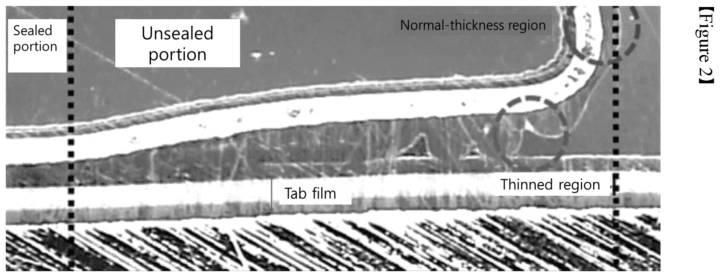

Specifically, the phenomenon in which, when the pouch-type sheet is directly sealed onto the lead tab film at the tab portion, the polymer material of the sealant layer is pushed out from the sealing portion (the sealed portion) toward the non-sealed portion (the unsealed portion) can be confirmed from the cross-sectional image of the sealing portion at the tab portion, as shown in FIG. 2. When the lead tab film and the pouch-type sheet are subjected to the sealing treatment at the tab portion, the sealing portion (the sealed portion) is pressurized and heated by a sealing block, and at this time, the polymer material of the sealant layer is pushed out from the sealing portion (the sealed portion) formed on the lead tab film toward the non-sealed portion (the unsealed portion). Accordingly, the thickness of the non-sealed portion (the unsealed portion) inevitably increases naturally due to the pushed-out polymer material, and, since the non-sealed portion (the unsealed portion), unlike the sealing portion (the sealed portion), receives the pressurization and heating by the sealing block only as ambient pressure and ambient heat and thus is not subjected to them evenly, the sealant layer cannot be uniformly fused onto the lead tab film. Therefore, as shown in FIG. 2, at the tab portion, the polymer material pushed out from the sealing portion (the sealed portion) flows non-uniformly in the non-sealed portion (the unsealed portion) and is cooled while becoming agglomerated and lifted, and accordingly, a portion in which the thickness of the sealant layer becomes thinner than the original thickness of the sealant layer is generated. When such a portion in which the thickness of the sealant layer becomes thin is generated, long-term reliability such as insulation failure and a decrease in chemical resistance may become problematic at the corresponding portion.

### [Disclosure]

### [Technical Problem]

The problem to be solved by the present invention is, in accommodating a secondary battery using a pouch case comprising a pouch film laminate, to prevent the thickness of the sealant layer from becoming thin, by allowing the polymer material pushed out from the sealing portion at the tab portion to be uniformly formed also in the non-sealed portion when the pouch case and the lead tab film are sealed, thereby preventing insulation failure and improving long-term reliability such as chemical resistance.

That is, an object of the present invention is to provide a pouch film laminate, as a film laminate of a pouch case for accommodating a secondary battery, in which, when the pouch case and the lead tab film are sealed, the polymer material pushed out from the sealing portion at the tab portion is uniformly formed also in the non-sealed portion.

Another object of the present invention is to provide a pouch case comprising the pouch film laminate.

Still another object of the present invention is to provide a secondary battery comprising the pouch case.

### [Technical Solution]

In order to solve the above problems, the present invention provides a pouch case for a secondary battery and a secondary battery comprising the same.
(1) The present invention provides a pouch case comprising a pouch film laminate comprising an outer layer, a barrier layer, and an inner layer, wherein a peel strength of a lead tab film sealing portion formed by bringing at least one surface of a lead tab film into contact with the inner layer and then sealing the same is 130 N/15 mm or more, and wherein, when a cross-section of the pouch case is observed in a direction orthogonal to the lead tab film sealing portion, no region in which the thickness of the inner layer is thinner than the average thickness of the inner layer of an accommodation space region exists, in a region adjacent to the lead tab film sealing portion in which the thickness of the inner layer increases.
(2) The present invention provides the pouch case of (1) above, wherein the inner layer comprises at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber.
(3) The present invention provides the pouch case of (1) or (2) above, wherein the inner layer has an average thickness of 40 µm or more and 120 µm or less.
(4) The present invention provides the pouch case of any one of (1) to (3) above, wherein the inner layer comprises a first sealant layer disposed on the barrier layer and a second sealant layer disposed on the first sealant layer.
(5) The present invention provides the pouch case of (4) above, wherein the first sealant layer has a melting point of 130°C or more and 150°C or less.
(6) The present invention provides the pouch case of (4) above, wherein the first sealant layer has a melting point of more than 150°C and 180°C or less.
(7) The present invention provides the pouch case of any one of (4) to (6) above, wherein the first sealant layer has a melt index (230°C, load of 2.16 kg) of 16 g/10 min or more and 30 g/10 min or less as measured by the ASTM D1238 method.
(8) The present invention provides the pouch case of any one of (4) to (6) above, wherein the first sealant layer has a melt index (230°C, load of 2.16 kg) of 5 g/10 min or more and less than 16 g/10 min as measured by the ASTM D1238 method.
(9) The present invention provides the pouch case of any one of (4) to (6) above, wherein the first sealant layer has an average thickness of 10 µm or more and 50 µm or less.
(10) The present invention provides the pouch case of any one of (4) to (9) above, wherein the second sealant layer has a melting point of 120°C or more and 160°C or less.
(11) The present invention provides the pouch case of any one of (4) to (10) above, wherein the second sealant layer has a melt index (230°C, load of 2.16 kg) of 5 g/10 min or more and 15 g/10 min or less as measured by the ASTM D1238 method.
(12) The present invention provides the pouch case of any one of (4) to (11) above, wherein the second sealant layer has an average thickness of 30 µm or more and 70 µm or less.
(13) The present invention provides the pouch case of any one of (1) to (12) above, wherein the pouch film laminate has an average thickness of 170 µm or more and 200 µm or less.
(14) The present invention provides the pouch case of any one of (1) to (13) above, wherein the lead tab film sealing portion is formed by bringing at least one surface of the lead tab film into contact with the inner layer and then sealing the same at a temperature of 205°C or more, for 1.5 seconds or more and 2.7 seconds or less, at a pressure of 0.1 MPa or more and 0.5 MPa or less, such that the thickness of the inner layer at the sealing portion becomes less than 85% of the thickness of the inner layer of the pouch film laminate.
(15) The present invention provides a secondary battery comprising the pouch case of any one of (1) to (14) above.

### [Advantageous Effects]

In the pouch case of the present invention, when the pouch film laminate and the lead tab film are sealed, the polymer material pushed out from the sealing portion at the tab portion can be uniformly formed also in the non-sealed portion, so that the thickness of the sealant layer of the pouch film laminate can be prevented from becoming thin, thereby preventing insulation failure and improving long-term reliability such as chemical resistance.

### [Description of Drawings]

FIG. 1 is an optical image showing the sealing portion (the sealed portion) and the non-sealed portion (the unsealed portion) of the tab portion in a case of a pouch-type secondary battery.
FIG. 2 is an optical image showing a cross-section of the sealing portion (the sealed portion) and the non-sealed portion (the unsealed portion) of the tab portion in a case of a pouch-type secondary battery.
FIG. 3 is an optical image showing the sealing portion (the sealed portion) and the non-sealed portion (the unsealed portion) of the tab portion of a pouch case manufactured according to Example 17 of the present invention.
FIG. 4 is an optical image showing the sealing portion (the sealed portion) and the non-sealed portion (the unsealed portion) of the tab portion of a pouch case manufactured according to Example 18 of the present invention.

### [Mode for Invention]

Hereinafter, the present invention will be described in more detail to facilitate understanding of the present invention.

The terms or words used in the description and claims of the present invention are not to be construed as being limited to their ordinary or dictionary meanings, but are to be construed as having meanings and concepts consistent with the technical idea of the present invention, based on the principle that an inventor may appropriately define the concepts of terms in order to describe his or her own invention in the best way.

The present invention provides a pouch case comprising a pouch film laminate.

According to one embodiment of the present invention, the pouch case may comprise a pouch film laminate comprising an outer layer, a barrier layer, and an inner layer, wherein a peel strength of a lead tab film sealing portion formed by bringing at least one surface of a lead tab film into contact with the inner layer and then sealing the same is 130 N/15 mm or more, and wherein, when a cross-section of the pouch case is observed in a direction orthogonal to the lead tab film sealing portion, no region in which the thickness of the inner layer is thinner than the average thickness of the inner layer of an accommodation space region exists, in a region adjacent to the lead tab film sealing portion in which the thickness of the inner layer increases. Such a pouch case can not only secure a sealing force by a sufficient adhesive force between the pouch case and the lead tab film, but can also, by allowing the polymer material pushed out from the sealing portion at the tab portion to be uniformly formed also in the non-sealed portion so as to prevent the thickness of the inner layer from becoming thin, prevent insulation failure and improve long-term reliability such as chemical resistance.

According to one embodiment of the present invention, in the pouch case, at least one of an upper film and a lower film constituting the pouch case may comprise the pouch film laminate, and preferably, both the upper film and the lower film constituting the pouch case may be the pouch film laminate.

According to one embodiment of the present invention, by applying the pouch film laminate as the upper film and/or the lower film, respectively, the pouch case can not only secure a sealing force for a sealing portion for sealing between the upper film and the lower film, but can also secure a sealing force between the upper film and/or the lower film and the lead tab film.

According to one embodiment of the present invention, in the pouch case, the peel strength of the lead tab film sealing portion formed by bringing at least one surface of the lead tab film into contact with the inner layer and then sealing the same may be 130 N/15 mm or more, and as specific examples, may be 130 N/15 mm or more, 131 N/15 mm or more, 132 N/15 mm or more, 133 N/15 mm or more, 134 N/15 mm or more, 135 N/15 mm or more, 136 N/15 mm or more, 137 N/15 mm or more, 138 N/15 mm or more, 139 N/15 mm or more, 140 N/15 mm or more, 141 N/15 mm or more, 142 N/15 mm or more, 143 N/15 mm or more, 144 N/15 mm or more, 145 N/15 mm or more, 146 N/15 mm or more, 147 N/15 mm or more, 148 N/15 mm or more, 149 N/15 mm or more, 150 N/15 mm or more, 151 N/15 mm or more, 152 N/15 mm or more, 153 N/15 mm or more, 154 N/15 mm or more, 155 N/15 mm or more, 156 N/15 mm or more, 157 N/15 mm or more, 158 N/15 mm or more, 159 N/15 mm or more, 160 N/15 mm or more, 161 N/15 mm or more, 162 N/15 mm or more, 163 N/15 mm or more, or 164 N/15 mm or more. Since a higher peel strength indicates better performance, the upper limit thereof is not particularly limited, but may be 200 N/15 mm or less, 190 N/15 mm or less, 180 N/15 mm or less, 179 N/15 mm or less, 178 N/15 mm or less, or 177 N/15 mm or less, and an excellent sealing force can be secured within this range.

According to one embodiment of the present invention, in the pouch case, when a cross-section of the pouch case is observed in a direction orthogonal to the lead tab film sealing portion, no region in which the thickness of the inner layer is thinner than the average thickness of the inner layer of the accommodation space region may exist, in a region adjacent to the lead tab film sealing portion in which the thickness of the inner layer increases. Here, the cross-section of the pouch case in the direction orthogonal to the lead tab film sealing portion may be confirmed even with the naked eye, but may be confirmed through an optical image for more accurate thickness measurement. Here, as the optical device for capturing the optical image, any optical device may be used without limitation as long as it is capable of capturing an image at a magnification at which the change in the thickness of the inner layer can be confirmed. The region adjacent to the lead tab film sealing portion in which the thickness of the inner layer increases means a region in which, when at least one surface of the lead tab film is brought into contact with the inner layer and then sealed, the inner layer located at the sealing portion is pushed out to the periphery of the sealing portion by the pressure during the sealing, so that the thickness of the inner layer increases. Here, since the region in which the thickness of the inner layer increases appears differently for each pouch case, the region cannot be limited by a precise ratio, but means a region from the sealing portion up to immediately before a region in which, based on the average thickness of the inner layer, the average thickness of the inner layer increases toward the accommodation space of the pouch case and then begins to decrease again so as to recover the average thickness. The region in which the thickness of the inner layer increases may appear in a shape that increases evenly, or may appear in various shapes such as a shape of an uneven structure, a shape of an embossed pattern, a rugged shape, or a bumpy shape; however, in any shape, if there exists a region in which the thickness of the inner layer is lower than the average thickness of the inner layer of the accommodation space region, this may appear as a recessed shape, a shape having a peak point, or the like, and long-term reliability such as insulation failure and a decrease in chemical resistance may become problematic in such a region. Therefore, the pouch case can solve the above-described problems by ensuring that, in the region adjacent to the lead tab film sealing portion in which the thickness of the inner layer increases, no region in which the thickness of the inner layer is thinner than the average thickness of the inner layer of the accommodation space region exists. Meanwhile, the average thickness of the inner layer of the accommodation space region may represent the average thickness of the inner layer of the pouch film laminate, and specifically may mean the average thickness of the inner layer in the pouch film laminate itself to which no sealing force has been applied.

According to one embodiment of the present invention, the outer layer, as a layer located on an outer surface of the pouch case, may comprise at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber.

According to one embodiment of the present invention, the outer layer may be composed of a laminate of two or more layers in terms of diversifying functions. As a specific example, the outer layer may comprise a surface protective layer and a stretching-assisting layer. Here, the surface protective layer, as a layer constituting the outermost outer layer of the pouch film laminate, may be a layer that performs a role of primarily protecting the pouch case from the external environment, and the stretching-assisting layer may be a layer that performs a role of assisting the adhesion between the surface protective layer and the barrier layer and, at the same time, preventing the surface protective layer and the barrier layer from peeling off from each other when they are stretched.

According to one embodiment of the present invention, the surface protective layer may comprise at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber. The component of the surface protective layer may be selected and used within a range of mechanical properties that does not impair the functions of the surface protective layer of the pouch case, namely durability, heat resistance, pinhole resistance, chemical resistance, and electrical insulation. As a specific example, the surface protective layer may comprise polyethylene terephthalate, which is excellent in durability, heat resistance, pinhole resistance, chemical resistance, and electrical insulation, and as a more specific example, may be a film or sheet made of polyethylene terephthalate.

According to one embodiment of the present invention, the stretching-assisting layer may comprise at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber. The component of the stretching-assisting layer may be selected and used within a range of mechanical properties that does not impair the function of the stretching-assisting layer of the pouch case. As a specific example, the stretching-assisting layer may comprise nylon, which is easy to adhere to the surface protective layer and exhibits behavior similar to that of the barrier layer when stretched, and as a more specific example, may be a film or sheet made of nylon.

According to one embodiment of the present invention, the surface protective layer may have an average thickness of 10 µm or more and 20 µm or less. As a specific example, the surface protective layer may have an average thickness of 10 µm or more, 11 µm or more, or 12 µm or more, and may also be 20 µm or less, 19 µm or less, 18 µm or less, 17 µm or less, 16 µm or less, 15 µm or less, 14 µm or less, 13 µm or less, or 12 µm or less, and within this range, the surface protection effect can be secured while preventing the thickness of the secondary battery from becoming excessively thick due to the pouch case.

According to one embodiment of the present invention, the stretching-assisting layer may have an average thickness of 15 µm or more and 30 µm or less. As a specific example, the surface protective layer may have an average thickness of 15 µm or more, 16 µm or more, 17 µm or more, 18 µm or more, 19 µm or more, 20 µm or more, 21 µm or more, 22 µm or more, 23 µm or more, 24 µm or more, or 25 µm or more, and may also be 30 µm or less, 29 µm or less, 28 µm or less, 27 µm or less, 26 µm or less, or 25 µm or less, and within this range, when stretched together with the barrier layer, behavior similar to that of the barrier layer can be secured while the adhesive force between the surface protective layer and the barrier layer can be further improved.

According to one embodiment of the present invention, the barrier layer, as a layer located at the center of the pouch case, may be a layer that performs a role of securing the mechanical strength of the pouch case and, at the same time, preventing the ingress and egress of gas, moisture, and the like into and out of the secondary battery, and in particular, in a secondary battery using a non-aqueous electrolyte, preventing the leakage of the electrolyte solution. In order to perform such a role, the barrier layer may be a foil made of metal, and as a specific example, may comprise at least one selected from the group consisting of aluminum, iron, copper, and nickel.

According to one embodiment of the present invention, the barrier layer may comprise aluminum from the viewpoint of being able to secure a mechanical strength suitable for a pouch case while preventing an increase in weight due to the pouch case, being excellent in formability, and being able to sufficiently secure the role as a barrier layer, and as a more specific example, may be an aluminum foil.

According to one embodiment of the present invention, the barrier layer may have an average thickness of 40 µm or more and 90 µm or less. As a specific example, the barrier layer may have an average thickness of 40 µm or more, 41 µm or more, 42 µm or more, 43 µm or more, 44 µm or more, 45 µm or more, 46 µm or more, 47 µm or more, 48 µm or more, 49 µm or more, 50 µm or more, 51 µm or more, 52 µm or more, 53 µm or more, 54 µm or more, 55 µm or more, 56 µm or more, 57 µm or more, 58 µm or more, 59 µm or more, or 60 µm or more, and may also be 90 µm or less, 89 µm or less, 88 µm or less, 87 µm or less, 86 µm or less, 85 µm or less, 84 µm or less, 83 µm or less, 82 µm or less, 81 µm or less, 80 µm or less, 79 µm or less, 78 µm or less, 77 µm or less, 76 µm or less, 75 µm or less, 74 µm or less, 73 µm or less, 72 µm or less, 71 µm or less, 70 µm or less, 69 µm or less, 68 µm or less, 67 µm or less, 66 µm or less, 65 µm or less, 64 µm or less, 63 µm or less, 62 µm or less, 61 µm or less, or 60 µm or less. When the barrier layer has an average thickness within the above range, the formability can be further improved while the mechanical strength as a barrier layer is secured, and the thickness of the secondary battery can be prevented from becoming excessively thick and the weight from increasing due to the pouch case.

According to one embodiment of the present invention, the inner layer, as a layer located on an inner surface of the pouch case, may also be expressed as a sealant layer. Since the inner layer is not only a layer that forms the sealing portion formed between the pouch film laminates and between the lead tab film and the pouch film laminate, but is also a layer that is in direct contact with the secondary battery accommodated inside the pouch case, both heat adhesiveness and formability, together with electrolyte resistance and insulation resistance, are required of the inner layer.

According to one embodiment of the present invention, the inner layer may comprise at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber.

According to one embodiment of the present invention, the inner layer may be composed of a laminate of two or more layers in terms of diversifying functions. As a specific example, the inner layer may comprise a first sealant layer disposed on the barrier layer and a second sealant layer disposed on the first sealant layer. Here, the first sealant layer may be a layer that performs a role of assisting the adhesion between the barrier layer and the second sealant layer and, at the same time, further improving the function as the inner layer, and the second sealant layer, as a layer constituting the innermost inner layer of the pouch film laminate, may be a layer that performs a role of preventing the leakage of the secondary battery, particularly the non-aqueous electrolyte, simultaneously with the sealing.

According to one embodiment of the present invention, the first sealant layer may comprise at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber. As a specific example, the first sealant layer may be polypropylene, from the viewpoint of satisfying the peel strength for the sealing portion between the pouch film laminate and the lead tab film and, at the same time, maintaining the polymer material pushed out from the sealing portion at the tab portion to be uniformly formed also in the non-sealed portion, and as a more specific example, may be a film or sheet made of polypropylene.

According to one embodiment of the present invention, the first sealant layer may have a melting point of 130°C or more and 150°C or less. As a specific example, the melting point of the first sealant layer may be 130°C or more, 131°C or more, 132°C or more, 133°C or more, 134°C or more, 135°C or more, 136°C or more, 137°C or more, 138°C or more, 139°C or more, or 140°C or more, and may also be 150°C or less, 149°C or less, 148°C or less, 147°C or less, 146°C or less, or 145°C or less. When the melting point of the first sealant layer is adjusted within the above range, it is possible to not only secure a sealing force by a sufficient adhesive force between the pouch case and the lead tab film, but also to allow the polymer material pushed out from the sealing portion at the tab portion to be uniformly formed also in the non-sealed portion so as to prevent the thickness of the inner layer from becoming thin, thereby preventing insulation failure and further improving long-term reliability such as chemical resistance.

According to one embodiment of the present invention, the first sealant layer may have a melting point of more than 150°C and 180°C or less. As a specific example, the first sealant layer may have a melting point of more than 150°C, 151°C or more, 152°C or more, 153°C or more, 154°C or more, 155°C or more, 156°C or more, 157°C or more, or 158°C or more, and may also be 180°C or less, 179°C or less, 178°C or less, 177°C or less, 176°C or less, 175°C or less, 174°C or less, 173°C or less, 172°C or less, 171°C or less, 170°C or less, 169°C or less, 168°C or less, 167°C or less, 166°C or less, 165°C or less, 164°C or less, or 163°C or less.

According to one embodiment of the present invention, the first sealant layer may have a melt index (230°C, load of 2.16 kg) of 16 g/10 min or more and 30 g/10 min or less as measured by the ASTM D1238 method. As a specific example, the melt index (230°C, load of 2.16 kg) of the first sealant layer as measured by the ASTM D1238 method may be 16 g/10 min or more, 17 g/10 min or more, 18 g/10 min or more, 19 g/10 min or more, 20 g/10 min or more, or 21 g/10 min or more, and may also be 30 g/10 min or less, 29 g/10 min or less, 28 g/10 min or less, 27 g/10 min or less, 26 g/10 min or less, 25 g/10 min or less, or 24 g/10 min or less. When the melt index of the first sealant layer is adjusted within the above range together with the melting point of the first sealant layer, the polymer material pushed out from the sealing portion at the tab portion is uniformly formed also in the non-sealed portion so as to prevent the thickness of the inner layer from becoming thin, thereby preventing insulation failure and further improving long-term reliability such as chemical resistance.

According to one embodiment of the present invention, the first sealant layer may have a melt index (230°C, load of 2.16 kg) of 5 g/10 min or more and less than 16 g/10 min as measured by the ASTM D1238 method. As a specific example, the melt index (230°C, load of 2.16 kg) of the first sealant layer as measured by the ASTM D1238 method may be 5 g/10 min or more, 6 g/10 min or more, 7 g/10 min or more, 8 g/10 min or more, or 9 g/10 min or more, and may also be less than 16 g/10 min, 15 g/10 min or less, 14 g/10 min or less, 143 g/10 min or less, 12 g/10 min or less, or 11 g/10 min or less.

According to one embodiment of the present invention, the first sealant layer may have an average thickness of 10 µm or more and 50 µm or less. As a specific example, the first sealant layer may have an average thickness of 10 µm or more, 11 µm or more, 12 µm or more, 13 µm or more, 14 µm or more, 15 µm or more, 16 µm or more, 17 µm or more, 18 µm or more, 19 µm or more, 20 µm or more, 21 µm or more, 22 µm or more, 23 µm or more, 24 µm or more, 25 µm or more, 26 µm or more, 27 µm or more, 28 µm or more, 29 µm or more, or 30 µm or more, and may also be 50 µm or less, 49 µm or less, 48 µm or less, 47 µm or less, 46 µm or less, 45 µm or less, 44 µm or less, 43 µm or less, 42 µm or less, 41 µm or less, 40 µm or less, 39 µm or less, 38 µm or less, 37 µm or less, 36 µm or less, 35 µm or less, 34 µm or less, 33 µm or less, 32 µm or less, 31 µm or less, or 30 µm or less, and within this range, the sealing force by a sufficient adhesive force between the pouch case and the lead tab film can be further improved.

According to one embodiment of the present invention, the second sealant layer may comprise at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber. As a specific example, the second sealant layer may be polypropylene, from the viewpoint of satisfying the peel strength for the sealing portion between the pouch film laminate and the lead tab film and, at the same time, maintaining the polymer material pushed out from the sealing portion at the tab portion to be uniformly formed also in the non-sealed portion, and as a more specific example, may be a film or sheet made of non-oriented polypropylene.

According to one embodiment of the present invention, the second sealant layer may have a melting point of 120°C or more and 160°C or less. As a specific example, the melting point of the second sealant layer may be 120°C or more, 121°C or more, 122°C or more, 123°C or more, 124°C or more, 125°C or more, 126°C or more, 127°C or more, 128°C or more, 129°C or more, 130°C or more, 131°C or more, 132°C or more, 133°C or more, 134°C or more, 135°C or more, or 136°C or more, and may also be 160°C or less, 159°C or less, 158°C or less, 157°C or less, 156°C or less, 155°C or less, 154°C or less, 153°C or less, 152°C or less, 151°C or less, 150°C or less, 149°C or less, 148°C or less, 147°C or less, 146°C or less, 145°C or less, 144°C or less, 143°C or less, 142°C or less, 141°C or less, or 140°C or less. When the melting point of the second sealant layer is adjusted within the above range, it is possible to not only secure a sealing force by a sufficient adhesive force between the pouch case and the lead tab film, but also to allow the polymer material pushed out from the sealing portion at the tab portion to be uniformly formed also in the non-sealed portion so as to prevent the thickness of the inner layer from becoming thin, thereby preventing insulation failure and further improving long-term reliability such as chemical resistance.

According to one embodiment of the present invention, the second sealant layer may have a melt index (230°C, load of 2.16 kg) of 5 g/10 min or more and 15 g/10 min or less as measured by the ASTM D1238 method. As a specific example, the melt index (230°C, load of 2.16 kg) of the second sealant layer as measured by the ASTM D1238 method may be 5 g/10 min or more, 6 g/10 min or more, 7 g/10 min or more, 8 g/10 min or more, or 9 g/10 min or more, and may also be 15 g/10 min or less, 14 g/10 min or less, 13 g/10 min or less, or 12 g/10 min or less. When the melt index of the second sealant layer is adjusted within the above range together with the melting point of the second sealant layer, the polymer material pushed out from the sealing portion at the tab portion is uniformly formed also in the non-sealed portion so as to prevent the thickness of the inner layer from becoming thin, thereby preventing insulation failure and further improving long-term reliability such as chemical resistance.

According to one embodiment of the present invention, the second sealant layer may have an average thickness of 30 µm or more and 70 µm or less. As a specific example, the second sealant layer may have an average thickness of 30 µm or more, 31 µm or more, 32 µm or more, 33 µm or more, 34 µm or more, 35 µm or more, 36 µm or more, 37 µm or more, 38 µm or more, 39 µm or more, 40 µm or more, 41 µm or more, 42 µm or more, 43 µm or more, 44 µm or more, 45 µm or more, 46 µm or more, 47 µm or more, 48 µm or more, 49 µm or more, or 50 µm or more, and may also be 70 µm or less, 69 µm or less, 68 µm or less, 67 µm or less, 66 µm or less, 65 µm or less, 64 µm or less, 63 µm or less, 62 µm or less, 61 µm or less, 60 µm or less, 59 µm or less, 58 µm or less, 57 µm or less, 56 µm or less, 55 µm or less, 54 µm or less, 53 µm or less, 52 µm or less, 51 µm or less, or 50 µm or less, and within this range, the sealing force by a sufficient adhesive force between the pouch case and the lead tab film can be further improved.

According to one embodiment of the present invention, when the inner layer comprises a first sealant layer disposed on the barrier layer and a second sealant layer disposed on the first sealant layer, the barrier layer and the inner layer may be formed by forming the first sealant layer by extruding it onto the barrier layer and laminating the second sealant layer onto the first sealant layer. That is, the first sealant layer may be a sealant layer formed by being extruded onto the barrier layer, and the second sealant layer may be a sealant layer formed by being laminated onto the first sealant layer. As a specific example, the first sealant layer disposed on the barrier layer and the second sealant layer disposed on the first sealant layer may be formed by an extrusion lamination method in which the first sealant layer is extruded and laminated between the barrier layer and the second sealant layer. As another specific example, when the inner layer comprises a first sealant layer disposed on the barrier layer and a second sealant layer disposed on the first sealant layer, the barrier layer and the inner layer may be formed by a method of co-extruding the first sealant layer and the second sealant layer so that they are sequentially laminated on the barrier layer.

According to one embodiment of the present invention, from the viewpoint of satisfying the peel strength of the sealing portion and, at the same time, uniformly forming the polymer material pushed out from the sealing portion at the tab portion also in the non-sealed portion when at least one surface of the lead tab film is brought into contact with the inner layer and then sealed, the pouch case may comprise an outer layer, a barrier layer, and an inner layer, wherein the inner layer comprises a first sealant layer disposed on the barrier layer and a second sealant layer disposed on the first sealant layer, wherein the first sealant layer has a melting point of 130°C or more and 150°C or less, a melt index (230°C, load of 2.16 kg) of 16 g/10 min or more and 30 g/10 min or less as measured by the ASTM D1238 method, and an average thickness of 10 µm or more and 50 µm or less, and wherein the second sealant layer has a melting point of 120°C or more and 160°C or less, a melt index (230°C, load of 2.16 kg) of 5 g/10 min or more and 15 g/10 min or less as measured by the ASTM D1238 method, and an average thickness of 30 µm or more and 70 µm or less.

According to one embodiment of the present invention, the pouch film laminate may have an average thickness of 170 µm or more and 200 µm or less. As a specific example, the pouch film laminate may have an average thickness of 170 µm or more, 171 µm or more, 172 µm or more, 173 µm or more, 174 µm or more, 175 µm or more, 176 µm or more, 177 µm or more, 178 µm or more, 179 µm or more, or 180 µm or more, and may also be 200 µm or less, 199 µm or less, 198 µm or less, 197 µm or less, 196 µm or less, 195 µm or less, 194 µm or less, 193 µm or less, 192 µm or less, 191 µm or less, 190 µm or less, 189 µm or less, 188 µm or less, 187 µm or less, 186 µm or less, or 185 µm or less, and within this range, the secondary battery can be protected while preventing the thickness of the secondary battery from becoming excessively thick due to the pouch case.

According to one embodiment of the present invention, the pouch case may be manufactured by bringing at least one surface of the lead tab film into contact with the inner layer of the pouch film laminate and then sealing the same at a temperature of 205°C or more, for 1.5 seconds or more and 2.7 seconds or less, at a pressure of 0.1 MPa or more and 0.5 MPa or less, such that the thickness of the inner layer at the sealing portion becomes less than 85% of the thickness of the inner layer of the pouch film laminate. As a specific example, during the sealing, the sealing temperature may be 205°C or more, 206°C or more, 207°C or more, 208°C or more, 209°C or more, 210°C or more, 211°C or more, 212°C or more, 213°C or more, 214°C or more, 215°C or more, 216°C or more, 217°C or more, 218°C or more, 219°C or more, or 220°C or more, and may also be 225°C or less, 224°C or less, 223°C or less, 222°C or less, 221°C or less, 220°C or less, 219°C or less, 218°C or less, 217°C or less, 216°C or less, or 215°C or less. In addition, the sealing time may be 1.5 seconds or more, 1.6 seconds or more, 1.7 seconds or more, or 1.8 seconds or more, and may also be 2.7 seconds or less, 2.6 seconds or less, 2.5 seconds or less, or 2.4 seconds or less. In addition, the sealing pressure may be 0.1 MPa or more, or 0.2 MPa or more, and may also be 0.5 MPa or less, or 0.4 MPa or less. When the sealing temperature, time, and pressure are adjusted in this way, a high peel strength can be secured for the sealing portion between the inner layer of the pouch film laminate and the lead tab film and, at the same time, the polymer material pushed out from the sealing portion at the tab portion is uniformly formed also in the non-sealed portion so as to prevent the thickness of the inner layer from becoming thin, thereby preventing insulation failure and improving long-term reliability such as chemical resistance.

The present invention provides a secondary battery comprising the pouch case.

According to one embodiment of the present invention, the secondary battery may comprise the pouch case and an electrode assembly accommodated in the pouch case.

According to one embodiment of the present invention, the secondary battery may be a lithium secondary battery.

Hereinafter, embodiments of the present invention will be described in detail so that those of ordinary skill in the art to which the present invention pertains can easily carry out the invention. However, the present invention may be embodied in various different forms and is not limited to the embodiments described herein.

### Manufacturing Example 1

Polypropylene was extruded between one surface of an aluminum foil having an average thickness of 60 µm as a barrier layer and one surface of a non-oriented polypropylene film having an average thickness of 50 µm as a second sealant layer to form a first sealant layer having an average thickness of 30 µm, thereby manufacturing a film laminate having an aluminum foil/first sealant layer/second sealant layer structure. In addition, a nylon film having an average thickness of 25 µm and a polyethylene terephthalate having an average thickness of 12 µm were respectively adhered to the other surface of the aluminum foil by a dry lamination method, thereby manufacturing a pouch film laminate having a PET/nylon/aluminum foil/first sealant layer/second sealant layer structure.

Here, the polypropylene forming the first sealant layer had a melting point of 145°C and a melt index (230°C, load of 2.16 kg) of 24 g/10 min as measured by the ASTM D1238 method, and the non-oriented polypropylene forming the second sealant layer had a melting point of 140°C and a melt index (230°C, load of 2.16 kg) of 12 g/10 min as measured by the ASTM D1238 method.

### Manufacturing Example 2

A first polypropylene and a second polypropylene were co-extruded onto one surface of an aluminum foil having an average thickness of 60 µm as a barrier layer so as to be sequentially laminated, thereby simultaneously forming a first sealant layer having an average thickness of 40 µm and a second sealant layer having a thickness of 40 µm. Subsequently, a nylon film having an average thickness of 25 µm and a polyethylene terephthalate having an average thickness of 12 µm were respectively adhered to the other surface of the aluminum foil by a dry lamination method, thereby manufacturing a pouch film laminate having a PET/nylon/aluminum foil/first sealant layer/second sealant layer structure.

Here, the polypropylene forming the first sealant layer had a melting point of 163°C and a melt index (230°C, load of 2.16 kg) of 11 g/10 min as measured by the ASTM D1238 method, and the polypropylene forming the second sealant layer had a melting point of 143°C and a melt index (230°C, load of 2.16 kg) of 9 g/10 min as measured by the ASTM D1238 method.

### Examples, Comparative Examples, and Experimental Examples

Using the pouch film laminate manufactured in Manufacturing Example 1, the lead tab film and the pouch film laminate were sealed under the conditions described in Table 1 below, and using the pouch film laminate manufactured in Manufacturing Example 2, the lead tab film and the pouch film laminate were sealed under the conditions described in Table 2 below.

For the sealing portions manufactured in the Examples and the Comparative Examples, the peel strength was measured by the following method and the thickness change was observed, and the results are shown together in Table 1.
* Peel strength of the sealing portion (N/15 mm): A specimen was prepared by cutting the lead tab film sealing portion manufactured in the Examples and the Comparative Examples so as to have a width of 15 mm, and then the peel strength of the sealing portion was measured using a universal testing machine (UTM) at a gauge length of 20 mm and a peel rate of 10 mm/min.
* Thickness change: The pouch case was cut in a direction orthogonal to the lead tab film sealing portion manufactured in the Examples and the Comparative Examples, and, after epoxy molding and polishing were performed on the cross-section, a cross-sectional analysis of the lead tab film sealing portion and the region adjacent thereto was performed using an optical device. From the optical image obtained from the optical device, it was observed whether or not there was a point and/or a region in which, in the region adjacent to the lead tab film sealing portion in which the thickness of the inner layer increases, the thickness of the inner layer became thinner than 80 µm, which is the total average thickness of the first sealant layer and the second sealant layer; the case where there was no point and/or region that became thin was indicated as OK, and the case where one or more points and/or regions that became thin existed was indicated as N.G.

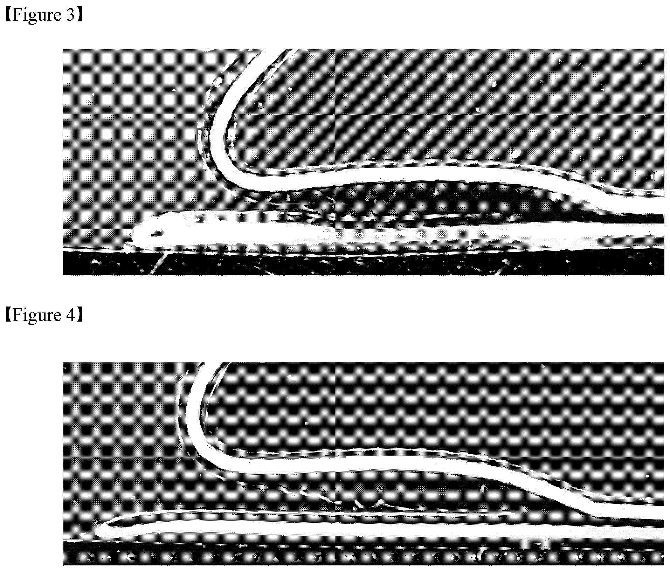

In addition, the optical image for Example 17 is shown in FIG. 3, and the optical image for Example 18 is shown in FIG. 4, respectively.

**[Table 1]**

| **Classification** | **Sealing temperature (°C)** | **Sealing time (s)** | **Sealing pressure (MPa)** | **Inner layer thickness retention rate (%) 1)** | **Peel strength (N/15 mm)** | **Thickness change** |
|---|---|---|---|---|---|---|
| Comparative Example 1 | 200 | 1.8 | 0.2 | 70 | Could not be manufactured | Could not be manufactured |
| Example 1 | 200 | 1.8 | 0.2 | 80 | 142 | OK |
| Comparative Example 2 | 200 | 1.8 | 0.2 | 85 | 128 | OK |
| Comparative Example 3 | 200 | 1.8 | 0.2 | 90 | 102 | OK |
| Comparative Example 4 | 200 | 1.8 | 0.4 | 70 | Could not be manufactured | Could not be manufactured |
| Example 2 | 200 | 1.8 | 0.4 | 80 | 139 | OK |
| Comparative Example 5 | 200 | 1.8 | 0.4 | 85 | 122 | OK |
| Comparative Example 6 | 200 | 1.8 | 0.4 | 90 | 103 | OK |
| Comparative Example 7 | 200 | 2.4 | 0.2 | 70 | Could not be manufactured | Could not be manufactured |
| Example 3 | 200 | 2.4 | 0.2 | 80 | 144 | OK |
| Comparative Example 8 | 200 | 2.4 | 0.2 | 85 | 128 | OK |
| Comparative Example 9 | 200 | 2.4 | 0.2 | 90 | 101 | OK |
| Comparative Example 10 | 200 | 2.4 | 0.4 | 70 | Could not be manufactured | Could not be manufactured |
| Example 4 | 200 | 2.4 | 0.4 | 80 | 142 | OK |
| Comparative Example 11 | 200 | 2.4 | 0.4 | 85 | 121 | OK |
| Comparative Example 12 | 200 | 2.4 | 0.4 | 90 | 105 | OK |
| Example 5 | 210 | 1.8 | 0.2 | 70 | 165 | OK |
| Example 6 | 210 | 1.8 | 0.2 | 80 | 152 | OK |
| Example 7 | 210 | 1.8 | 0.2 | 85 | 138 | OK |
| Comparative Example 13 | 210 | 1.8 | 0.2 | 90 | 121 | OK |
| Example 8 | 210 | 1.8 | 0.4 | 70 | 164 | OK |
| Example 9 | 210 | 1.8 | 0.4 | 80 | 155 | OK |
| Example 10 | 210 | 1.8 | 0.4 | 85 | 141 | OK |
| Comparative Example 14 | 210 | 1.8 | 0.4 | 90 | 120 | OK |
| Example 11 | 210 | 2.4 | 0.2 | 70 | 166 | OK |
| Example 12 | 210 | 2.4 | 0.2 | 80 | 155 | OK |
| Example 13 | 210 | 2.4 | 0.2 | 85 | 133 | OK |
| Comparative Example 15 | 210 | 2.4 | 0.2 | 90 | 122 | OK |
| Example 14 | 210 | 2.4 | 0.4 | 70 | 165 | OK |
| Example 15 | 210 | 2.4 | 0.4 | 80 | 149 | OK |
| Example 16 | 210 | 2.4 | 0.4 | 85 | 132 | OK |
| Comparative Example 16 | 210 | 2.4 | 0.4 | 90 | 128 | OK |
| Example 17 | 220 | 1.8 | 0.2 | 70 | 174 | OK |
| Example 18 | 220 | 1.8 | 0.2 | 80 | 168 | OK |
| Example 19 | 220 | 1.8 | 0.2 | 85 | 149 | OK |
| Example 20 | 220 | 1.8 | 0.2 | 90 | 135 | OK |
| Example 21 | 220 | 1.8 | 0.4 | 70 | 177 | OK |
| Example 22 | 220 | 1.8 | 0.4 | 80 | 168 | OK |
| Example 23 | 220 | 1.8 | 0.4 | 85 | 154 | OK |
| Example 24 | 220 | 1.8 | 0.4 | 90 | 140 | OK |
| Comparative Example 17 | 220 | 2.4 | 0.2 | 70 | 181 | N.G |
| Comparative Example 18 | 220 | 2.4 | 0.2 | 80 | 172 | N.G |
| Example 25 | 220 | 2.4 | 0.2 | 85 | 159 | OK |
| Example 26 | 220 | 2.4 | 0.2 | 90 | 142 | OK |
| Comparative Example 19 | 220 | 2.4 | 0.4 | 70 | 180 | N.G |
| Comparative Example 20 | 220 | 2.4 | 0.4 | 80 | 174 | N.G |
| Example 27 | 220 | 2.4 | 0.4 | 85 | 155 | OK |
| Example 28 | 220 | 2.4 | 0.4 | 90 | 147 | OK |

| | | | | | | |
|---|---|---|---|---|---|---|
| *1) Inner layer thickness retention rate: the ratio of the thickness of the inner layer at the sealing portion to the thickness of the inner layer of the pouch film laminate.* | | | | | | |

**[Table 2]**

| **Classification** | **Sealing temperature (°C)** | **Sealing time (s)** | **Sealing pressure (MPa)** | **Inner layer thickness retention rate (%) 1)** | **Peel strength (N/15 mm)** | **Thickness change** |
|---|---|---|---|---|---|---|
| Comparative Example 21 | 200 | 1.8 | 0.2 | 70 | 124 | OK |
| Comparative Example 22 | 200 | 1.8 | 0.2 | 80 | 109 | OK |
| Comparative Example 23 | 200 | 1.8 | 0.2 | 85 | 89 | OK |
| Comparative Example 24 | 200 | 1.8 | 0.2 | 90 | 88 | OK |
| Comparative Example 25 | 200 | 1.8 | 0.4 | 70 | 127 | OK |
| Comparative Example 26 | 200 | 1.8 | 0.4 | 80 | 111 | OK |
| Comparative Example 27 | 200 | 1.8 | 0.4 | 85 | 90 | OK |
| Comparative Example 28 | 200 | 1.8 | 0.4 | 90 | 91 | OK |
| Comparative Example 29 | 200 | 2.4 | 0.2 | 70 | 130 | OK |
| Comparative Example 30 | 200 | 2.4 | 0.2 | 80 | 119 | OK |
| Comparative Example 31 | 200 | 2.4 | 0.2 | 85 | 94 | OK |
| Comparative Example 32 | 200 | 2.4 | 0.2 | 90 | 89 | OK |
| Comparative Example 33 | 200 | 2.4 | 0.4 | 70 | 129 | OK |
| Comparative Example 34 | 200 | 2.4 | 0.4 | 80 | 112 | OK |
| Comparative Example 35 | 200 | 2.4 | 0.4 | 85 | 97 | OK |
| Comparative Example 36 | 200 | 2.4 | 0.4 | 90 | 90 | OK |
| Comparative Example 37 | 210 | 1.8 | 0.2 | 70 | 128 | OK |
| Comparative Example 38 | 210 | 1.8 | 0.2 | 80 | 118 | OK |
| Comparative Example 39 | 210 | 1.8 | 0.2 | 85 | 90 | OK |
| Comparative Example 40 | 210 | 1.8 | 0.2 | 90 | 86 | OK |
| Example 29 | 210 | 1.8 | 0.4 | 70 | 131 | OK |
| Comparative Example 41 | 210 | 1.8 | 0.4 | 80 | 112 | OK |
| Comparative Example 42 | 210 | 1.8 | 0.4 | 85 | 92 | OK |
| Comparative Example 43 | 210 | 1.8 | 0.4 | 90 | 88 | OK |
| Comparative Example 44 | 210 | 2.4 | 0.2 | 70 | 129 | OK |
| Comparative Example 45 | 210 | 2.4 | 0.2 | 80 | 122 | OK |
| Comparative Example 46 | 210 | 2.4 | 0.2 | 85 | 97 | OK |
| Comparative Example 47 | 210 | 2.4 | 0.2 | 90 | 91 | OK |
| Example 30 | 210 | 2.4 | 0.4 | 70 | 133 | OK |
| Comparative Example 48 | 210 | 2.4 | 0.4 | 80 | 121 | OK |
| Comparative Example 49 | 210 | 2.4 | 0.4 | 85 | 99 | OK |
| Comparative Example 50 | 210 | 2.4 | 0.4 | 90 | 89 | OK |
| Example 31 | 220 | 1.8 | 0.2 | 70 | 139 | OK |
| Comparative Example 51 | 220 | 1.8 | 0.2 | 80 | 124 | OK |
| Comparative Example 52 | 220 | 1.8 | 0.2 | 85 | 100 | OK |
| Comparative Example 53 | 220 | 1.8 | 0.2 | 90 | 88 | OK |
| Example 32 | 220 | 1.8 | 0.4 | 70 | 139 | OK |
| Comparative Example 54 | 220 | 1.8 | 0.4 | 80 | 127 | OK |
| Comparative Example 55 | 220 | 1.8 | 0.4 | 85 | 107 | OK |
| Comparative Example 56 | 220 | 1.8 | 0.4 | 90 | 93 | OK |
| Comparative Example 57 | 220 | 2.4 | 0.2 | 70 | 141 | OK |
| Comparative Example 58 | 220 | 2.4 | 0.2 | 80 | 122 | OK |
| Comparative Example 59 | 220 | 2.4 | 0.2 | 85 | 101 | OK |
| Comparative Example 60 | 220 | 2.4 | 0.2 | 90 | 89 | OK |
| Comparative Example 61 | 220 | 2.4 | 0.4 | 70 | 140 | OK |
| Comparative Example 62 | 220 | 2.4 | 0.4 | 80 | 129 | OK |
| Comparative Example 63 | 220 | 2.4 | 0.4 | 85 | 103 | OK |
| Comparative Example 64 | 220 | 2.4 | 0.4 | 90 | 91 | OK |

| | | | | | | |
|---|---|---|---|---|---|---|
| *1) Inner layer thickness retention rate: the ratio of the thickness of the inner layer at the sealing portion to the thickness of the inner layer of the pouch film laminate.* | | | | | | |

As shown in Tables 1 and 2 and FIGS. 3 and 4, it was confirmed that the pouch cases of Examples 1 to 32 according to the present invention secured a high peel strength at the lead tab film sealing portion and, at the same time, when the cross-section of the pouch case was observed in the direction orthogonal to the lead tab film sealing portion, no region in which the thickness of the inner layer was thinner than the average thickness of the inner layer of the accommodation space region existed, in the region adjacent to the lead tab film sealing portion in which the thickness of the inner layer increases. In particular, it was confirmed that Examples 5, 8, 11, 14, 17, 18, 21, and 22 exhibited a particularly high peel strength.

On the other hand, it could be expected that the pouch cases of Comparative Examples 1 to 64 had a problem in long-term reliability, because they either could not be manufactured, had a very low peel strength, or, even when the peel strength was high, had, when the cross-section of the pouch case was observed in the direction orthogonal to the lead tab film sealing portion, a region in which the thickness of the inner layer was thinner than the average thickness of the inner layer of the accommodation space region, in the region adjacent to the lead tab film sealing portion in which the thickness of the inner layer increases.

## Claims

1. A pouch case comprising a pouch film laminate comprising an outer layer, a barrier layer, and an inner layer, wherein a peel strength of a lead tab film sealing portion, which is formed by bringing at least one surface of a lead tab film into contact with the inner layer and then sealing the at least one surface of the lead tab film and the inner layer, is 130 N/15 mm or more, and wherein, when a cross-section of the pouch case is observed in a direction orthogonal to the lead tab film sealing portion, no region in which a thickness of the inner layer is thinner than an average thickness of the inner layer of an accommodation space region exists in a region adjacent to the lead tab film sealing portion in which the thickness of the inner layer increases.

2. The pouch case of claim 1, wherein the inner layer comprises at least one selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, poly(para-phenylene benzobisoxazole), polyarylate, Teflon, and glass fiber.

3. The pouch case of claim 1, wherein the inner layer has an average thickness of 40 µm or more and 120 µm or less.

4. The pouch case of claim 1, wherein the inner layer comprises a first sealant layer disposed on the barrier layer and a second sealant layer disposed on the first sealant layer.

5. The pouch case of claim 4, wherein the first sealant layer has a melting point of 130°C or more and 150°C or less.

6. The pouch case of claim 4, wherein the first sealant layer has a melting point of more than 150°C and 180°C or less.

7. The pouch case of claim 4, wherein the first sealant layer has a melt index of 16 g/10 min or more and 30 g/10 min or less as measured by the ASTM D1238 method under conditions of a temperature of 230°C and a load of 2.16 kg.

8. The pouch case of claim 4, wherein the first sealant layer has a melt index of 5 g/10 min or more and less than 16 g/10 min as measured by the ASTM D1238 method under conditions of a temperature of 230°C and a load of 2.16 kg.

9. The pouch case of claim 4, wherein the first sealant layer has an average thickness of 10 µm or more and 50 µm or less.

10. The pouch case of claim 4, wherein the second sealant layer has a melting point of 120°C or more and 160°C or less.

11. The pouch case of claim 4, wherein the second sealant layer has a melt index of 5 g/10 min or more and 15 g/10 min or less as measured by the ASTM D1238 method under conditions of a temperature of 230°C and a load of 2.16 kg.

12. The pouch case of claim 4, wherein the second sealant layer has an average thickness of 30 µm or more and 70 µm or less.

13. The pouch case of claim 1, wherein the pouch film laminate has an average thickness of 170 µm or more and 200 µm or less.

14. The pouch case of claim 1, wherein the lead tab film sealing portion is formed by bringing at least one surface of the lead tab film into contact with the inner layer and then sealing the at least one surface of the lead tab film and the inner layer at a temperature of 205°C or more, for 1.5 seconds or more and 2.7 seconds or less, at a pressure of 0.1 MPa or more and 0.5 MPa or less, such that a thickness of the inner layer at the sealing portion becomes less than 85% of a thickness of the inner layer of the pouch film laminate.

15. A secondary battery comprising the pouch case of any one of claims 1 to 14.
